# EUROPÄISCHE PATENTSCHRIFT

(11) **EP 1 171 704 B1**
(45) Veröffentlichungstag und Bekanntmachung des Hinweises auf die Patenterteilung: **18.09.2002**
(21) Anmeldenummer: 00938488.4
(22) Anmeldetag: 17.04.2000
(51) Int. Cl.: F02D 45/00, F01L 9/04, F02D 41/20, F02D 41/22, F02D 41/26, F02D 13/02

(54) **STEUERUNGSANLAGE FÜR EINE BRENNKRAFTMASCHINE MIT ELEKTROMECHANISCH BETÄTIGTEN GASWECHSELVENTILEN**
CONTROL SYSTEM FOR AN INTERNAL COMBUSTION ENGINE WITH ELECTROMECHANICALLY ACTUATED CHARGE CHANGE VALVES
SYSTEME DE COMMANDE POUR UN MOTEUR A COMBUSTION INTERNE A SOUPAPES D'ECHANGE GAZEUX ACTIONNEES ELECTROMECANIQUEMENT

(30) Priorität: 21.04.1999 DE 19918029
(43) Veröffentlichungstag der Anmeldung: 16.01.2002
(73) Patentinhaber: SIEMENS AKTIENGESELLSCHAFT, 80333 München (DE)
(72) Erfinder: VOGT, Thomas, D-93049 Regensburg (DE); KOCH, Achim, D-93105 Tegernheim (DE); HARTKE, Andreas, D-80807 München (DE)
(86) Internationale Anmeldenummer: DE0001204
(87) Internationale Veröffentlichungsnummer: WO00063547

(56) Entgegenhaltungen:
- EP-A- 0 309 986
- EP-A- 0 854 280
- DE-A- 4 420 425
- DE-A- 19 723 563
- US-A- 5 201 296
- US-A- 5 890 078

## Beschreibung

Die Erfindung betrifft eine Steuerungsanlage für eine Brennkraftmaschine mit mindestens einem elektromechanisch betätigten Gaswechselventil, einer Einspritzanlage und einer Zündanlage, die jeweils von Endstufen betrieben werden.

Brennkraftmaschinen, deren Gaswechselventile elektromechanisch betätigt werden, sind bekannt. Im Gegensatz zu nockenwellenbetätigten Ventilen werden diese Ventile zum Öffnen und Schließen in Abhängigkeit von der Drehlage der Kurbelwelle angesteuert; eine feste mechanische Kopplung mit der Kurbelwelle liegt nicht vor. Elektromechanische Stellglieder für Gaswechselventile sind beispielsweise aus DE 297 19 502 U1 oder EP 0 724 067 A1 bekannt. Sie weisen eine zwischen einer geschlossenen und einer offenen Stellung liegende Ruhestellung auf, aus der sie mittels Elektromagneten ausgelenkt werden können.

Um ein Ventil zu öffnen oder zu schließen, wird die jeweilige Wicklung bestromt, wobei der erforderliche Strom in der Fangphase größer ist als in der Haltephase, in der das Ventil in einer Endstellung gehalten wird.

Während bei herkömmlichem, nockenwellenbetätigtem Ventiltrieb eine Vorgabe der Steuerzeiten im Betriebssteuergerät der Brennkraftmaschine nicht anfällt, müssen bei elektromechanisch betätigten Ventilen entsprechende Steuerzeiten berechnet und vorgegeben werden.

Die Einspritzanlage und die Zündanlage einer Brennkraftmaschine wird üblicherweise jeweils von Endstufen an gesteuert, die im Betriebssteuergerät der Brennkraftmaschine angeordnet sind.

Das Betriebssteuergerät und das Ventilsteuergerät kommunizieren miteinander, üblicherweise über einen Datenbus z.B. einen CAN-Datenbus.

Im Gegensatz zu nockenwellenbetätigten Ventilen können elektromechanisch betätigte Ventile unabhängig vom Lauf der Brennkraftmaschine geöffnet und geschlossen werden. Bei einem Ausfall der elektromechanischen Betätigung eines Ventils, der beispielsweise durch einen Ausfall des Stellgerätes, der das Stellgerät ansteuernden Endstufe oder einen Fehler im Ventilsteuergerät verursacht sein kann und u.U. auch nur kurzzeitig vorliegt, kann deshalb das betreffende Ventil unerwünscht geöffnet bleiben.

Ein solcher Ausfall wird zwar vom Ventilsreuergerät erkannt, es kann diesen jedoch über den CAN-Bus nicht rechtzeitig an das Betriebssteuergerät melden, da Datenaustausch über diese Busverbindung in der Regel nur alle 180° Kurbelwellenwinkel stattfindet.

Tritt ein solcher Ausfall bei einem Einlaßventil auf, kann es deshalb zur Zündung in den Ansaugtrakt bzw. das Saugrohr hinein kommen, was zu einer Beschädigung des Ansaugtraktes führen kann, insbesondere wenn dieser aus Kunststoff gefertigt ist.

Aus der US-A-5,890,078 ist eine Steuerungsanlage für eine Brennkraftmaschine bekannt, bei dem zusätzlich zu einem einen Prozessor aufweisenden Betriebssteuergerät ein einen Prozessor aufweisendes Steuergerät vorgesehen ist, das mit dem Betriebssteuergerät über eine bidirektionale Kommunikationsleitung Daten austauscht. Das zusätzliche Steuergerät steuert die Stellglieder für die Zündung, Einspritzung, Drosselklappenverstellung und die Schaltung eines Automatikgetriebes. Stellt das zusätzliche Steuergerät fest, dass ein Fehler entweder im Betriebssteuergerät oder an der Schnittstelle zwischen den beiden Steuergeräten auftritt, so übernimmt das zusätzliche Steuergerät die Berechnung der Steuergrößen, um die Stellglieder unabhängig von dem Betriebssteuergerät steuern zu können. Mit der Steuerung einer Brennkraftmaschine mit elektromechanisch betätigten Gaswechselventilen beschäftigt sich diese Druckschrift nicht.

Aus der EP-A-0,309,986 ist ein elektronisches Steuergerät zur Verwendung in einem Kraftfahrzeug bekannt, das in der Nähe der Brennkraftmaschine angeordnet ist und zur Vermeidung einer Überhitzung an den Kühlkreislauf der Brennkraftmaschine thermisch angeschlossen ist.

Es ist Aufgabe der vorliegenden Erfindung, eine Steueranlage für eine Brennkraftmaschine mit mindestens einem elektromechanisch betätigten Gaswechselventil anzugeben, bei dem auch bei Ausfall eines elektromechanisch betätigten Gaswechselventils eine unerwünschte Zündung von Kraftstoff/Luft-Gemisch verhindert werden kann.

Diese Aufgabe wird durch die in Anspruch 1 gekennzeichnete Erfindung gelöst.

Um bei Ausfall eines elektromechanisch betätigten Gaswechselventils die Zündung von Kraftstoff/Luft-Gemisch verhindern zu können, ist die Endstufe der Zündanlage in das Ventilsteuergerät integriert. Dadurch kann das Ventilsteuergerät bei Erkennen eines Ventilausfalls die Zündung noch rechtzeitig unterbinden, da keine zeitraubende Kommunikation über einen BUS zum Betriebssteuergerät der Brennkraftmaschine mehr nötig ist.

Die Abschaltung der Zündung kann für alle Zylinder erfolgen, ist aber auch zylinderselektiv möglich.

Vorteilhafterweise sind alle Endstufen für Einspritzanlage, Ventilbetätigung und Zündanlage im Ventilsteuergerät angeordnet, so daß das Betriebssteuergerät frei von diesbezüglichen Endstufen ist. Dadurch ist ihre thermische Anbindung bzw. Unterbringung an der Brennkraftmaschine erheblich vereinfacht. Weiter bringt die Zusammenfassung aller Endstufen im Ventilsteuergerät den Vorteil, dass die ohnehin für die Endstufen der elektromechanischen Ventilbetätigung wünschenswerte Wasserkühlung, die durch eine Anbindung an den Kühlkreislauf der Brennkraftmaschine bewerkstelligt werden kann, die thermischen Verhältnisse in den anderen Endstufen verbessert.

Vorteilhafterweise fordert das Betriebssteuergerät vom Ventilsteuergerät, in dem alle Endstufen vereinigt sind, nur noch ein gewünschtes Moment oder eine gewünschte Last der Brennkraftmaschine an, so daß das Ventilsteuergerät dann quasi ein Momentensteuergerät ist, das Zündzeitpunkt, Einspritzzeitpunkt, Abgasrückführrate und Ventilöffnungszeiten selbständig wählt und an den Endstufen entsprechend einstellt.

Vorteilhafte Ausgestaltungen der Erfindung sind in den Unteransprüchen gekennzeichnet.

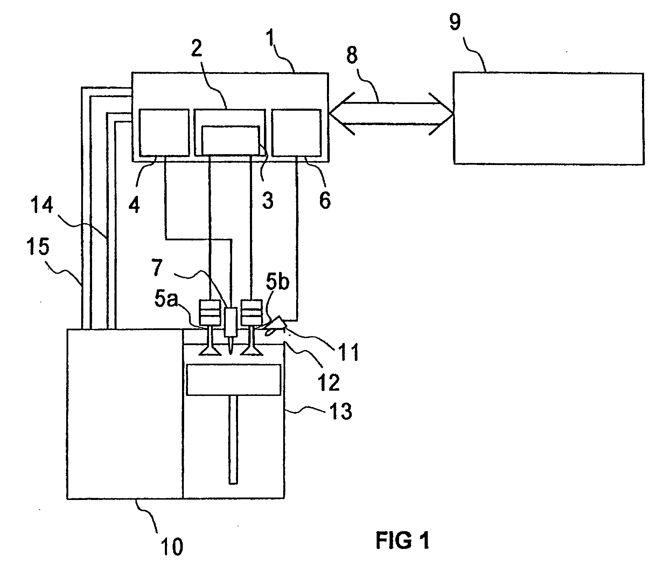

Die Erfindung wird nachfolgend unter Bezugnahme auf die Zeichnung näher erläutert.

Die einzige Figur der Zeichnung zeigt in schematischer Darstellung eine Brennkraftmaschine 10 mit einem Betriebssteuergerät 9 sowie einem Ventilsteuergerät 1. Betriebssteuergerät 9 und Ventilsteuergerät 1 sind über einen CAN-Bus 8 miteinander verbunden. Das Ventilsteuergerät 1 enthält eine Endstufe 4 für die Zündanlage 7, von der in der Figur nur schematisch eine Zündkerze dargestellt ist. Weiter enthält das Ventilsteuergerät 1 eine Endstufe 6 für die Einspritzanlage 11, von der in der Figur nur schematisch ein Einspritzventil dargestellt ist. Schließlich enthält das Ventilsteuergerät 1 noch einen Aufsetzregler 2 mit einer Endstufe 3 für die elektromechanisch betätigten Gaswechselventile 5a, 5b. Jeder Zylinder 13 der Brennkraftmaschine hat einen Ansaugtrakt 12.

Das Ventilsteuergerät 1 ist über einen Vorlauf 14 und einen Rücklauf 15 an den Kühlkreislauf der Brennkraftmaschine 10 angeschlossen.

Das Betriebssteuergerät 9 gibt über den CAN-Bus 8 dem Ventilsteuergerät 1 eine Momenten- oder Lastanforderung an, die das Betriebssteuergerät 9 aus einem Fahrpedalhebel (nicht dargestellt) sowie weiteren Kenngrößen ermittelt.

Die Kommunikation über den CAN-Bus erfolgt dabei alle 180° Kurbelwellenwinkel.

Das Ventilsteuergerät 1, dem zusätzlich noch ein Signal über die Kurbelwellenstellung zugeführt wird, berechnet abhängig von den vom Betriebssteuergerät 9 über den CAN-Bus 8 zugeführten Daten den Zündzeitpunkt, den Einspritzzeitpunkt und die Ventilöffnungszeiten. Letztere ermöglichen auch das Einstellen einer Abgasrückführung, wenn das Auslaßventil zumindest während einer Zeitspanne des Ansaugtraktes geöffnet wird.

Das Ventilsteuergerät steuert die Endstufen 2, 3, 4, 6 geeignet an, so daß die Zündanlage 7, die Einspritzanlage 11 und die elektromechanisch betätigten Gaswechselventile entsprechend betrieben werden.

Stellt das Ventilsteuergerät 1 einen Ausfall eines Gaswechseiventils, entweder des Einlaßventils 5a oder des Auslaßventils 5b fest, kann es die Endstufe 4 entsprechend ansteuern, daß die Zündung im betroffenen Zylinder 13 unterbleibt. Alternativ ist es auch möglich, die Endstufe 6 der Einspritzanlage 11 entsprechend anzusteuern, um die Entstehung eines zündfähigen Kraftstoff/Luft-Gemisches am Zylinder 13 zu verhindern. Durch beide Maßnahmen kann sichergestellt werden, daß eine Zündung in den Ansaugtrakt 12 des betroffenen Zylinders 13 hinein unterbleibt, wenn beispielsweise das Einlaßventil 5a ausgefallen ist.

Dadurch, daß alle Endstufen im Ventilsteuergerät 1 vereinigt sind, kann dieses noch sehr kurzfristig die Einspritzung oder Zündung unterbrechen, kurzfristiger als es möglich wäre, wenn das Ventilsteuergerät 1 über den CAN-Bus 8 diese Unterbrechung an das Betriebssteuergerät 9 melden müßte.

Beispielsweise kann die Zündung bis 5 ms vor dem Zündzeitpunkt noch unterbrechen werden, ohne Schäden an der Zündspule bzw. der zugehörigen Endstufe befürchten zu müssen.

Durch die Anbindung an den Kühlkreislauf über den Vorlauf 14 und den Rücklauf 15 sind die Endstufen 2, 3, 4, 6 im Ventilsteuergerät 1 sehr viel besser gekühlt, als sie es im Betriebssteuergerät 9 ohne Wasserkühlung wären.

Anstatt vom Betriebssteuergerät 9 über den CAN-Bus 8 nur noch ein gewünschtes Moment bzw. eine gewünschte Last der Brennkraftmaschine 10 an das Ventilsteuergerät 1 zu übermitteln, kann das Betriebssteuergerät 9 natürlich auch Zündwinkel, Einspritzzeit sowie Ventilsteuerzeit für jeden Zylinder an das Ventilsteuergerät übertragen, das die Endstufen 4, 2, 3, 6 dann entsprechend ansteuert.

Die Zusammenfassung der Endstufen für Zündung, Einspritzung und elektromechanische Ventilbetätigung vereinigt alle für den thermischen Verbrennungsprozeß maßgeblichen Endstufen in einem Gerät.

Vorteilhafterweise hat das Betriebssteuergerät 9 lediglich noch einen Eingriff an einer Drosselklappe. Dies dient sozusagen als "Not-Aus"-Schalter, da das Betriebssteuergerät 9 durch Drosselklappeneingriff die Brennkraftmaschine 10 drosseln kann, wenn aus irgendeinem Grunde die Laststeuerung über die Einlaßventile 5a vom Ventilsteuergerät 1 nicht korrekt vorgenommen wird.

## Patentansprüche

1. Steuerungsanlage für eine Brennkraftmaschine (10) mit mindestens einem elektromechanisch betätigten Gaswechselventil (5a, 5b), einer Einspritzanlage (11) und einer Zündanlage (7), die jeweils von Endstufen (2, 3, 6, 4) betrieben werden, welche Steuerungsanlage aufweist:
ein mindestens einen Prozessor aufweisendes Betriebssteuergerat (9) für die Brennkraftmaschine (10), das Vorgaben zur Betatigung der Einspritzanlage (6, 11) und des Gaswechselventils (2, 3, 5a, 5b) ermittelt, und
ein mindestens einen Prozessor aufweisendes Ventilsteuergerät (1), das mit dem Betriebssteuergerät (9) über eine bidirektionale Kommunikationsleitung (8) Daten austauscht, wobei
die Endstufen (6, 4, 2, 3) für die Zündanlage (7) sowie für das elektromechanisch betätigte Gaswechselventil (5a, 5b) im Ventilsteuergerät (1) angeordnet sind, das diese abhängig von den vom Betriebssteuergerät (9) erhaltenen Daten ansteuert, und wobei das Ventilsteuergerät (1) so ausgebildet ist, dass es ein Versagen eines elektromechanisch betätigten Gaswechselventils (5a), das zu einem nicht oder nicht vollständig geschlossenen Gaswechselventil (5a) in mindestens einem der Zylinder (13) der Brennkraftmaschine (10) führt, erkennt, und
dass es die Zündung im betroffenen Zylinder durch geeignete Ansteuerung der Endstufe (4) der Zündanlage (7) unterbricht, um eine Zündung von Kraftstoff/Luft-Gemisch im betroffenen Zylinder (13) zu vermeiden.

2. Steuerungsanlage nach Anspruch 1, **dadurch gekennzeichnet, daß** das Ventilsteuergerät (11) alle Endstufen (2, 3, 4, 6) der Zündanlage (7) des Gaswechselventils (5a, 5b) und der Einspritzanlage (11) umfaßt, und daß das Betriebssteuergerät (9) frei von diesbezüglichen Endstufen ist.

3. Steuerungsanlage nach einem der vorhergehenden Ansprüche, **dadurch gekennzeichnet, daß** das Ventilsteuergerät (1) an eine Kühlanlage thermisch angeschlossen ist.

4. Steuerungsanlage nach Anspruch 3, **dadurch gekennzeichnet, daß** das Ventilsteuergerät (1) über einen Vor- und einen Rücklauf (14, 15) an den Kühlkreislauf der Brennkraftmaschine (10) angeschlossen ist.

5. Steuerungsanlage nach einem der vorhergehenden Ansprüche in Verbindung mit Anspruch 2, **dadurch gekennzeichnet, daß** das Betriebssteuergerät (9) so ausgebildet ist, daß es über die Kommunikationsleitung (8) vom Ventilsteuergerät (1) ein gewünschtes Moment oder eine gewünschte Last für die Brennkraftmaschine (10) anfordert, und daß das Ventilsteuergerät (1) so ausgebildet ist, daß es die Betriebsparameter der Einspritzanlage (11), der Zündanlage (7) und/oder die Öffnungszeiten des Gaswechselventils (5a, 5b) bestimmt und an den Endstufen (6, 4, 2, 3) einstellt.

6. Steuerungsanlage nach einem der vorhergehenden Ansprüche, **dadurch gekennzeichnet, daß** das Betriebssteuergerät (9) zwecks einer Lastdrosselung eine Verbindungsleitung zu einer Drosselklappe hat.

## Claims

1. Control system for an internal combustion engine (10) with at least one electromechanically actuated gas flow valve (5a, 5b), an injection system (11) and an ignition system (7), which are each operated by power stages (2, 3, 6, 4), which control system has
an operational control device (9), having at least one processor, for the internal combustion engine (10), which ascertains settings for actuation of the injection system (6, 11) and of the gas flow valve (2, 3, 5a, 5b), and
a valve control device (1), having at least one processor, which exchanges data with the operational control device (9) by way of a bi-directional communication line (8), whereby the power stages (6, 4, 2, 3) for the ignition system (7) and also for the electromechanically actuated gas flow valves (5a, 5b) are located in the valve control device (1), which controls these dependent on the data received from the operational control device (9), and whereby the valve control device (1) is designed such that it detects a failure of an electromechanically actuated gas flow valve (5a) which results in a gas flow valve (5a) not being closed or not being completely closed in at least one of the cylinders (13) of the internal combustion engine (10), and such that it interrupts the ignition in the cylinder in question by means of appropriate control of the power stage (4) of the ignition system (7) in order to prevent ignition of the fuel/air mixture in the cylinder (13) in question.

2. Control system according to Claim 1, **characterised in that** the valve control device (1) comprises all the power stages (2, 3, 4, 6) of the ignition system (7), of the gas flow valve (5a, 5b) and of the injection system (11), and that the operational control device (9) is free from power stages relating thereto.

3. Control system according to one of the preceding claims, **characterised in that** the valve control device (1) is thermally connected to a cooling system.

4. Control system according to Claim 3, **characterised in that** the valve control device (1) is connected to the cooling circuit of the internal combustion engine (10) by way of a feed and a return (14, 15).

5. Control system according to one of the preceding claims in conjunction with Claim 2, **characterised in that** the operational control device (9) is designed such that it requests a desired torque or a desired load for the internal combustion engine (10) from the valve control device (1) by way of a communication line (8), and that the valve control device (1) is designed such that it determines the operating parameters for the injection system (11), the ignition system (7) and/or the opening times of the gas flow valve (5a, 5b) and sets them on the power stages (6, 4, 2, 3).

6. Control system according to one of the preceding claims, **characterised in that** the operational control device (9) has a connecting line to a throttle valve for the purpose of load restriction.

## Revendications

1. Dispositif de commande pour un moteur à combustion interne (10), comportant au moins une soupape de changement de gaz (5a, 5b) actionnée électromécaniquement, un dispositif d'injection (11) et un dispositif d'allumage (7), qui sont chacun entraînés par des étages de sortie (2, 3, 4, 6), ce dispositif de commande présentant:
- un appareil de commande du fonctionnement (9) du moteur à combustion interne (10), qui comporte au moins un processeur, et qui détermine des données préalables pour l'actionnement du dispositif d'injection (6, 11) et de la soupape de changement de gaz (2, 3, 5a, 5b), et
- un dispositif de commande de soupape (1) qui comporte au moins un processeur, et qui, au moyen d'une ligne bidirectionnelle de communication (8), échange des données avec l'appareil de commande du fonctionnement (9), les étages de sortie (6, 4, 2, 3) pour le dispositif d'allumage (7) et pour la soupape de changement de gaz (5a, 5b) actionnée électromécaniquement, étant disposés dans l'appareil de commande de soupape (1), qui les commande en fonction des données reçues de l'appareil de commande du fonctionnement (9), et le dispositif de commande de soupape (1) étant conçu de telle façon qu'il reconnaisse un défaut de fonctionnement d'une soupape de changement de gaz (5a) actionnée électromécaniquement, défaut de fonctionnement qui conduit, dans au moins l'un des cylindres (13) du moteur à combustion interne (10), d'une part à la non-fermeture ou à la fermeture incomplète de la soupape d'admission (5a), et de telle façon qu'il interrompt l'allumage dans le cylindre concerné par la commande de l'étage de sortie (4) du dispositif d'allumage (7), pour empêcher l'allumage du mélange air-carburant dans le cylindre concerné (13).

2. Dispositif de commande suivant la revendication 1, **caractérisé en ce que** l'appareil de commande de soupape (11) englobe tous les étages de sortie (2, 3, 4, 6) du dispositif d'allumage (7), de la soupape de changement de gaz (5a, 5b) et du dispositif d'injection (11), et **en ce que** l'appareil de commande du fonctionnement (9) est dépourvu de tels étages de sortie.

3. Dispositif de commande suivant l'une des revendications précédentes, **caractérisé en ce que** l'appareil de commande de soupape (1) est raccordé thermiquement à une installation de refroidissement.

4. Dispositif de commande suivant la revendication 3, **caractérisé en ce que** l'appareil de commande de soupape (1) est raccordé par une conduite d'arrivée et de retour (14, 15) au circuit de refroidissement du moteur à combustion interne (10).

5. Dispositif de commande suivant l'une des revendications précédentes, **caractérisé en ce que** l'appareil de commande du fonctionnement (9) est réalisé de telle façon que, par l'intermédiaire de la ligne de communication (8), il requiert, depuis l'appareil de commande de soupape (1), un couple souhaité ou une charge souhaitée pour le moteur à combustion interne (10), et **en ce que** l'appareil de commande de soupape (1) est réalisé de telle façon qu'il détermine les paramètres de fonctionnement du dispositif d'injection (11), du dispositif d'allumage (7) et/ou les temps d'ouverture de la soupape de changement de gaz (5a, 5b) et **en ce qu'**il les règle sur les étages de sortie (6, 4, 2, 3).

6. Dispositif de commande suivant l'une des revendications précédentes, **caractérisé en ce que** l'appareil de commande du fonctionnement (9) possède, en vue de limiter la charge, un conducteur de liaison vers un papillon.
